# EUROPEAN PATENT APPLICATION

(11) **EP 3 968 491 A1**
(43) Date of publication of application: **16.03.2022**
(21) Application number: 20826619.7
(22) Date of filing: 28.05.2020
(51) Int. Cl.: H02J 7/00

(54) **CHARGING CIRCUIT, CHARGING CHIP, MOBILE TERMINAL, AND CHARGING SYSTEM**

(30) Priority: 19.06.2019 CN 201910532519
(71) Applicant: GUANGDONG OPPO MOBILE TELECOMMUNICATIONS CORP., LTD., Dongguan, Guangdong 523860 (CN)
(72) Inventor: LIU, Shaobin, Dongguan, Guangdong 523860 (CN); TIAN, Chen, Dongguan, Guangdong 523860 (CN)
(74) Representative: Thorniley, Peter
(86) International application number: PCT/CN2020/092753
(87) International publication number: WO 2020/253491

(57) **Abstract**

The present disclosure relates to a charging circuit, a charging chip, a mobile terminal, and a charging system. The charging circuit includes a first transistor, a second transistor, and a control circuit. The first transistor has a control electrode connected to a predetermined voltage terminal, a first electrode connected to an energy storage device of an apparatus to be charged, and a second electrode connected to a second electrode of the second transistor. A control electrode of the second transistor is connected to the control circuit. A first electrode of the second transistor is connected to a power supply device. The control circuit is configured to control a working state of the second transistor. When at least one of the first transistor and the second transistor is in a turn-off state, a difference between a voltage of the predetermined voltage terminal and a maximum value of the energy storage device when the energy storage device is fully charged is smaller than a predetermined threshold. Through embodiments of the present disclosure, it is possible to avoid the occurrence of electromigration in the two transistors when charging is not performed, thereby avoiding the problem of serious heat generation in the charging circuit during charging.

## Description

### CROSS-REFERENCE TO RELATED APPLICATIONS

This application claims priority to Chinese Patent Application No. 2019105325197 titled "CHARGING CIRCUIT, CHARGING CHIP, MOBILE TERMINAL, AND CHARGING SYSTEM", filed on June 19, 2019 to the China National Intellectual Property Administration, the content of which is incorporated herein by reference in its entirety.

### FIELD

The present disclosure relates to the field of charging technology, and more particularly, to a charging circuit, a charging chip, a mobile terminal and a charging system.

### BACKGROUND

With the development of electronic devices, users have higher and higher requirements for the charging technology of electronic devices. For example, it is required to shorten the charging time and reduce the phenomenon of heat generation during charging. Among them, fast charging has become a development trend of the charging technology.

At present, in the charging circuit used for fast charging, electromigration often occurs, which leads to an increase in the charging power of the electronic device during charging, thereby causing serious heat generation of the electronic device.

### SUMMARY

Based on this, it is necessary to provide a charging circuit, a charging chip, a mobile terminal, and a charging system that can avoid the occurrence of electromigration in order to solve the above technical problems.

In one aspect, an embodiment of the present disclosure provides a charging circuit. The charging circuit includes a first transistor, a second transistor, and a control circuit; the first transistor has a first electrode connected to an energy storage device of an apparatus to be charged, and a second electrode connected to a second electrode of the second transistor; the second transistor has a control electrode connected to the control circuit, and a first electrode connected to a power supply device; the control circuit is configured to control a working state of the second transistor. When at least one of the first transistor and the second transistor is in a turn-off state, a control electrode of the first transistor is connected to a predetermined voltage terminal, and a difference between a voltage of the predetermined voltage terminal and a maximum voltage of the energy storage device when the energy storage device is fully charged is smaller than a predetermined threshold.

In one embodiment, the predetermined voltage terminal provides a turn-on voltage for the first transistor, and the control circuit provides a turn-on voltage for the second transistor; and the power supply device transmits a current to the energy storage device through the first transistor and the second transistor when both the first transistor and the second transistor are in a turn-on state.

In one embodiment, the charging circuit further includes a switch circuit connected to a controller of the apparatus to be charged. The switch circuit is respectively connected to the predetermined voltage terminal, the control circuit, a control electrode of the first transistor, and the control electrode of the second transistor; the controller is configured to, in response to detecting a charging signal, control the switch circuit to be turned on to electrically connect the control circuit with the control electrode of the first transistor; or, in response to detecting a disconnection of the charging signal, control the switch circuit to be turned on to electrically connect the predetermined voltage terminal with the control electrode of the first transistor; and the control circuit is configured to, in response to being electrically to the control electrode of the first transistor, provide a turn-on voltage for the first transistor and the second transistor to enable the power supply device to charge the energy storage device through the first transistor and the second transistor.

In one embodiment, the switch circuit includes a first switch and a second switch that are separately connected to the controller of the apparatus to be charged. The first switch has one terminal connected to the control electrode of the first transistor, and another terminal connected to the predetermined voltage terminal; the second switch has one terminal connected to the control electrode of the first transistor, and another terminal connected to the control circuit; and the controller is configured to, in response to detecting the charging signal, control the first switch to be opened and the second switch to be closed to electrically connect the control circuit with the control electrode of the first transistor; or, in response to detecting a disconnection of the charging signal, control the first switch to be closed and the second switch to be opened to electrically connect the predetermined voltage terminal with the control electrode of the first transistor.

In one embodiment, the control circuit includes a turn-on control unit and a switch control unit. The turn-on control unit has an input terminal connected to the power supply device and a clock signal terminal, and an output terminal connected to the control electrode of the second transistor; the switch control unit has an input terminal connected to a switch signal terminal, and an output terminal connected to the control electrode of the second transistor; and the turn-on control unit is configured to provide a turn-on voltage for the second transistor when the switch control unit is turned off.

In one embodiment, the turn-on control unit includes a charging signal input subunit, a clock signal input subunit, and a signal processing subunit. The charging signal input subunit has an input terminal connected to the power supply device, and an output terminal connected to an input terminal of the signal processing subunit; the clock signal input subunit has an input terminal connected to the clock signal terminal, and an output terminal connected to the input terminal of the signal processing subunit; and the signal processing subunit has an output terminal connected to the control electrode of the second transistor; and the charging signal input subunit is configured to input a charging signal of the power supply device to the signal processing subunit; the clock signal input subunit is configured to input a clock signal to the signal processing subunit; and the signal processing subunit is configured to provide a turn-on voltage for the second transistor based on the charging signal and the clock signal.

In one embodiment, the charging signal input subunit includes a first resistor, a first diode, and a first capacitor. The first resistor has one terminal connected to the power supply device, and another terminal connected to an anode of the first diode and one terminal of the first capacitor; a cathode of the first diode is connected to the input terminal of the signal processing subunit; and the other terminal of the first capacitor is grounded.

In one embodiment, the clock signal input subunit includes a second capacitor. One terminal the second capacitor is configured to receive the clock signal, and the other terminal of the second capacitor is connected to the input terminal of the signal processing subunit.

In one embodiment, the signal processing subunit includes a second diode, a second resistor, a third capacitor, and a third resistor. An anode of the second diode is connected to the output terminal of the charging signal input subunit and the output terminal of the clock signal input subunit, and a cathode of the second diode is connected to one terminal of the second resistor and one terminal of the third capacitor; the other terminal of the second resistor is connected to the control electrode of the second transistor; the other terminal of the third capacitor is grounded; and one terminal of the third resistor is connected to the control electrode of the second transistor, and the other terminal of the third resistor is grounded.

In one embodiment, the switch control unit includes a third transistor and a third diode. The third transistor has a control electrode connected to the switch signal terminal, a source connected to an anode of the third diode, and a drain connected to the control electrode of the second transistor; and a cathode of the third diode is grounded.

In one embodiment, the control circuit further includes a protection unit. The protection unit has an input terminal connected to the power supply device, and an output terminal connected to the control electrode of the second transistor; and the protection unit is configured to protect the second transistor when the power supply device inputs a negative voltage.

In one embodiment, the protection unit includes a fourth transistor, a fifth transistor and a fourth resistor. The fourth transistor has a control electrode connected to a control electrode of the fifth transistor and one terminal of the fourth resistor, a source connected to the power supply device, and a drain connected to a drain of the fifth transistor; a source of the fifth transistor is connected to the control electrode of the second transistor; and the other terminal of the fourth resistor is grounded.

In one embodiment, the first electrode of the first transistor is a source, and the second electrode of the first transistor is a drain; and the first electrode of the second transistor is a source, and the second electrode of the second transistor is a drain.

In one embodiment, the first electrode of the first transistor is a drain, and the second electrode of the first transistor is a source; and the first electrode of the second transistor is a drain, and the second electrode of the second transistor is a source.

In one embodiment, the charging circuit further includes a fifth resistor, and one terminal of the fifth resistor is connected to the second electrode of the first transistor, and the other terminal of the fifth resistor is grounded.

In another aspect, an embodiment of the present disclosure provides a charging chip including the charging circuit as described above.

In another aspect, an embodiment of the present disclosure provides a mobile terminal including the charging circuit as described above.

In another aspect, an embodiment of the present disclosure provides a charging system including a power adapter and the mobile terminal as described above, and the power adapter is configured to charge the mobile terminal through a USB port of the mobile terminal.

In the above charging circuit, charging chip, mobile terminal, and charging system, the charging circuit includes the first transistor, the second transistor and the control circuit; the first electrode of the first transistor is connected to the energy storage device of the apparatus to be charged, and the second electrode of the first transistor is connected to the second electrode of the second transistor; the control electrode of the second transistor is connected to the control circuit, and the first electrode of the second transistor is connected to the power supply device; the control circuit is configured to control the working state of the second transistor; and when at least one of the first transistor and the second transistor is in the turn-off state, the control electrode of the first transistor is connected to the predetermined voltage terminal, and a difference between the voltage of the predetermined voltage terminal and the maximum voltage of the energy storage device when the energy storage device is fully charged is smaller than the predetermined threshold. According to the embodiment of the present disclosure, when charging is not performed, the voltage of the predetermined voltage terminal enables a small voltage difference between the gate and the source of the first transistor, thereby avoiding the occurrence of electromigration of the first transistor. At the same time, there is no voltage difference between the gate and the source of the second transistor, and thus no electromigration occurs. Since the occurrence of electromigration in the two transistors is avoided when charging is not performed, a gate-source impedance of the two transistors will not be reduced, and an on-resistance of the two transistors will not be increased, increasing a charging power, and finally avoiding a problem of serious heat generation of the charging circuit during charging.

### BRIEF DESCRIPTION OF DRAWINGS

FIG. 1 is a first schematic diagram of a structure of a charging circuit according to an embodiment;
FIG. 2 is a second schematic diagram of a structure of a charging circuit according to an embodiment;
FIG. 3 is a third schematic diagram of a structure of a charging circuit according to an embodiment;
FIG. 4 is a fourth schematic diagram of a structure of a charging circuit according to an embodiment;
FIG. 5 is a fifth schematic diagram of a structure of a charging circuit according to an embodiment;
FIG. 6 is a sixth schematic diagram of a structure of a charging circuit according to an embodiment;
FIG. 7 is a seventh schematic diagram of a structure of a charging circuit according to an embodiment;
FIG. 8 is an eighth schematic diagram of a structure of a charging circuit according to an embodiment;
FIG. 9 is a ninth schematic diagram of a structure of a charging circuit according to an embodiment;
FIG. 10 is a tenth schematic diagram of a structure of a charging circuit according to an embodiment;
FIG. 11 is an eleventh schematic diagram of a structure of a charging circuit according to an embodiment;
FIG. 12 is a twelfth schematic diagram of a structure of a charging circuit according to an embodiment; and
FIG. 13 is a schematic diagram of a structure of a charging system according to an embodiment.

### DESCRIPTION OF EMBODIMENTS

In order to make the above objectives, technical solutions, and advantages of the present disclosure more obvious and understandable, the present disclosure will be further described in detail below in conjunction with the accompanying drawings and specific embodiments. It should be understood that the specific embodiments described here are only used to explain the present disclosure, rather than limit the present disclosure.

An embodiment of the present disclosure provides a charging circuit. The charging circuit includes a first transistor M1, a second transistor M2, and a control circuit 10. The first transistor M1 has a first electrode connected to an energy storage device V1 of an apparatus to be charged, and a second electrode connected to a second electrode of the second transistor M2. The second transistor M2 has a control electrode connected to the control circuit 10, and a first electrode connected to a power supply device V2. The control circuit 10 is configured to control a working state of the second transistor M2. When at least one of the first transistor M1 and the second transistor M2 is in a turn-off state, a control electrode of the first transistor M1 is connected to a predetermined voltage terminal Vg1, and a difference between a voltage of the predetermined voltage terminal Vg1 and a maximum voltage of the energy storage device V1 when the energy storage device V1 is fully charged is smaller than a predetermined threshold.

In this embodiment, the apparatus to be charged may include various personal computers, notebook computers, smart phones, tablet computers, and portable wearable devices. The energy storage device V1 may include a rechargeable battery, and the power supply device V2 may include a power adapter, a power bank, etc. The embodiment of the present disclosure does not have detailed limitations on the charging device, the energy storage device V1, and the power supply device V2, which can be set according to actual conditions.

The charging circuit includes the first transistor M1, the second transistor M2 and the control circuit 10. Where the control electrode of the first transistor M1 is connected to the predetermined voltage terminal Vg1, the first electrode of the first transistor M1 is connected to the energy storage device V1 of the apparatus to be charged, and the second electrode of the first transistor M1 is connected to the second electrode of the second transistor M2. The control electrode of the second transistor M2 is connected to the control circuit 10, and the first electrode of the second transistor M2 is connected to the power supply device V2.

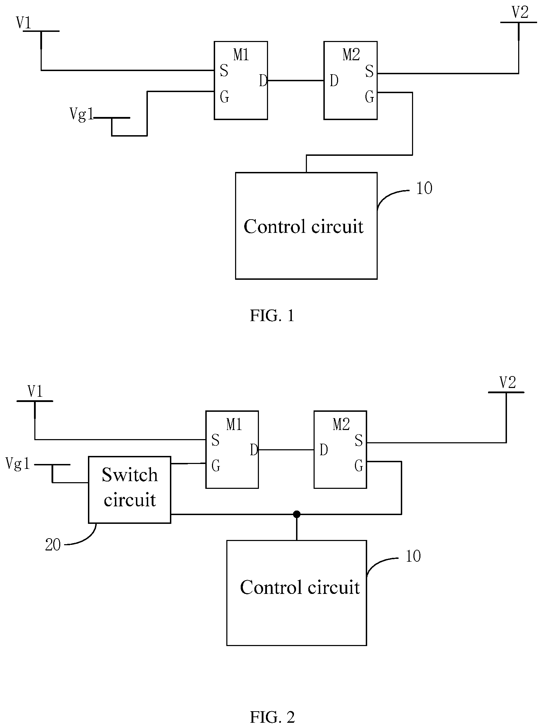

As illustrated in FIG. 1, as an example for illustration, the first electrode of the first transistor M1 is a source, the second electrode of the first transistor M1 is a drain, and the first electrode of the second transistor M2 is a source, and the second electrode of the second transistor M2 is a drain. When the power supply device V2 is not charging the energy storage device V1 of the apparatus to be charged, the control circuit 10 controls the second transistor M2 to be in an off state, and the difference between the voltage of the predetermined voltage terminal Vg1 and the maximum voltage of the energy storage device V1 when the energy storage device V1 is fully charged is smaller than the predetermined threshold. For example, the maximum voltage of the energy storage device V1 when the energy storage device V1 is fully charged is 5V, the predetermined threshold is 0.5V, and then the voltage of the predetermined voltage terminal Vg1 may be between 4.6V and 5V The predetermined voltage terminal Vg1 may be a voltage terminal provided by a voltage output terminal of an existing circuit in the apparatus to be charged, or a circuit configured in the apparatus to be charged provides the predetermined voltage terminal, which are not limited in detail in the embodiment of the present disclosure, and can be configured according to actual conditions. In this way, after the energy storage device V1 is fully charged, a voltage difference between a gate and a source of the first transistor M1 is small, which can avoid an electromigration between the gate and the source of the first transistor M1.

At the same time, since the power supply device V2 is not charging the energy storage device V1 of the apparatus to be charged, the voltage of the first electrode of the second transistor M2 is 0V, the control circuit 10 controls the second transistor M2 to be in an off state, and the voltage of the gate of the second transistor M2 is smaller than a turn-on voltage of the second transistor M2. In this way, the voltage difference between the gate and the source of the second transistor M2 is also very small when charging is not being performed, which can avoid electromigration between the gate and the source of the second transistor M2. Since the occurrence of electromigration in the transistor is avoided when charging is not being performed, a gate-source impedance of the transistor will not be reduced, and thus an on-resistance of the transistor will not be increased, thereby increasing the charging power, and ultimately avoiding a problem of serious heat generation of the charging circuit during charging.

In one embodiment, as illustrated in FIG. 1, the predetermined voltage terminal Vg1 provides a turn-on voltage for the first transistor M1; the control circuit 10 is configured to provide a turn-on voltage for the second transistor M2; and the power supply device V2 transmits a current to the energy storage device V1 through the first transistor M1 and the second transistor M2 when both the first transistor M1 and the second transistor M2 are in a turn-on state.

Specifically, when the power supply device V2 charges the energy storage device V1 of the apparatus to be charged, the control electrode of the first transistor M1 is connected to the predetermined voltage terminal Vg1, the predetermined voltage terminal Vg1 provides a turn-on voltage for the first transistor M1, and the first transistor M1 is turned on. At the same time, the control circuit 10 provides a turn-on voltage for the second transistor M2, and the second transistor M2 is turned on. Since the first transistor M1 and the second transistor M2 are both in a turn-on state, the power supply device V2 can charge the energy storage device V1 through the first transistor M1 and the second transistor M2.

The above charging circuit includes the first transistor, the second transistor and the control circuit; the control electrode of the first transistor is connected to the predetermined voltage terminal, the first electrode of the first transistor is connected to the energy storage device of the apparatus to be charged, and the second electrode of the first transistor is connected to the second electrode of the second transistor; the control electrode of the second transistor is connected to the control circuit, and the first electrode of the second transistor is connected to the power supply device; the control circuit is configured to control the working state of the second transistor. When at least one of the first transistor and the second transistor is in the turn-off state, the difference between the voltage of the predetermined voltage terminal and the maximum voltage of the energy storage device when the energy storage device is fully charged is smaller than the predetermined threshold. According to the embodiment of the present disclosure, when charging is not performed, the voltage of the predetermined voltage terminal enables a relatively small voltage difference between the gate and the source of the first transistor, which can avoid electromigration of the first transistor. At the same time, there is no voltage difference between the gate and the source of the second transistor, and thus no electromigration occurs. Since the electromigration in the two transistors is avoided when charging is not performed, the gate-source impedance of the two transistors will not be reduced, and the on-resistance of the two transistors will not be increased, the charging power can be increased, and ultimately avoiding a problem of serious heat generation of the charging circuit during charging.

In some scenarios, the predetermined voltage terminal is applicable only when the power supply device is not charging the energy storage device of the apparatus to be charged, and when the power supply device is charging the energy storage device of the apparatus to be charged, the control circuit can unitarily provide the turn-on voltage for the first transistor and the second transistor. This embodiment relates to an optional structure of such a charging circuit. On the basis of the embodiment illustrated in FIG. 1, as illustrated in FIG. 2, the above charging circuit further includes a switch circuit 20 connected to the controller of the apparatus to be charged, a controller, and a control circuit 10. The switch circuit 20 is connected respectively to the predetermined voltage terminal Vg1, the control circuit 10, the control electrode of the first transistor M1, and the control electrode of the second transistor M2. The controller is configured to, in response to detecting a charging signal, control the switch circuit 20 to be turned on to electrically connect the control circuit 10 with the control electrode of the first transistor M1, or, in response to detecting a disconnection of the charging signal, control the switch circuit 20 to be turned on to electrically connect the predetermined voltage terminal Vg1 with the control electrode of the first transistor M1. The control circuit 10 configured to, in response to being electrically connected to the control electrode of the first transistor M1, provide a turn-on voltage for the first transistor M1 and the second transistor M2 to enable the power supply device V2 to charge the energy storage device V1 through the first transistor M1 and the second transistor M2.

In this embodiment, the charging circuit may further include a switch circuit 20 connected to the controller of the apparatus to be charged. The switch circuit 20 is connected respectively to the predetermined voltage terminal Vg1, the control circuit 10, the control electrode of the first transistor M1, and the control electrode of the second transistor M2. When the controller detects the charging signal, the switch circuit 20 is controlled to electrically connect the control circuit 10 with the control electrode of the first transistor M1. At this time, the control circuit 10 provides the turn-on voltage for the first transistor M1 and the second transistor M2 at the same time. The first transistor M1 and the second transistor M2 are both in a turn-on state, and the power supply device V2 can charge the energy storage device V1 through the charging circuit.

When the controller detects that the charging signal is disrupted, the switch circuit 20 is controlled to electrically connect the predetermined voltage terminal Vg1 with the control electrode of the first transistor M1. In this way, the predetermined voltage terminal Vg1 enables the gate voltage of the first transistor M1 to be close to the maximum voltage of the energy storage device V1 when the energy storage device V1 is fully charged, and then enables a small voltage difference between the gate and the source of the first transistor M1, which can avoid an electromigration between the gate and the source of the transistor. At the same time, since the power supply device V2 does not charge the energy storage device V1, the voltage of the first electrode of the second transistor M2 is 0V, and the control circuit 10 controls the second transistor M2 to be turned off, that is, the gate voltage of the second transistor M2 is smaller than the turn-on voltage of the second transistor M2. In this way, the voltage difference between the gate and the source of the second transistor M2 is also very small, and thus a phenomenon of electromigration between the gate and the source of the second transistor M2 can also be avoided.

One switch may be provided in the above-mentioned switch circuit 20, and the switch has one terminal connected to the control electrode of the first transistor M1 and another terminal configured to be electrically connected to the control circuit 10 when the controller detects the charging signal, and to be electrically connected to the predetermined voltage terminal Vg1 when the controller detects that the charging signal is disconnected. The embodiment of the present disclosure does not limit the switch circuit 20 in detail, which can be set according to actual conditions.

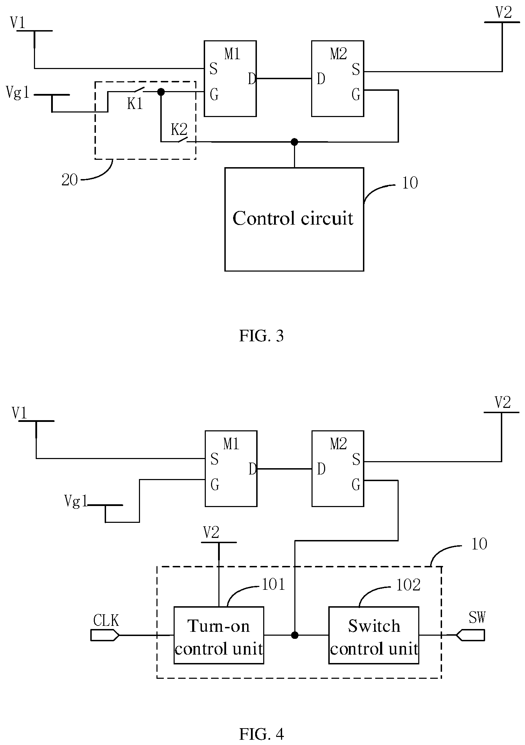

In some scenarios, the function of the above-mentioned switch circuit 20 can also be realized by providing a plurality of switches. As illustrated in FIG. 3, the switch circuit 20 includes a first switch K1 and a second switch K2 that are separately connected to the controller of the apparatus to be charged. The first switch K1 has one terminal connected to the control electrode of the first transistor M1 and another terminal connected to the predetermined voltage terminal Vgl; the second switch K2 has one terminal connected to the control electrode of the first transistor M1 and another terminal connected to the control circuit 10. The controller is configured to control the first switch K1 to be opened and the second switch K2 to be closed in response to detecting the charging signal, so as to electrically connect the control circuit 10 with the control electrode of the first transistor M1; and the controller is further configured to control the first switch K1 to be closed and the second switch K2 to be opened in response to detecting a disconnection of the charging signal, so as to electrically connect the predetermined voltage terminal Vg1 with the control electrode of the first transistor M1.

In this embodiment, the apparatus to be charged further includes the controller, the switch circuit 20 includes the first switch K1 and the second switch K2, and the controller is respectively connected to the first switch K1 and the second switch K2. One terminal of the first switch K1 is connected to the control electrode of the first transistor M1, and the other terminal of the first switch K1 is connected to the predetermined voltage terminal Vgl; and one terminal of the second switch K2 is connected to the control electrode of the first transistor M1, and the other terminal of the second switch K2 is connected to the control circuit 10.

In response to detecting the charging signal, the controller controls the first switch K1 to be opened and controls the second switch K2 to be closed, so that the control circuit 10 is connected to the control electrode of the first transistor M1. The control circuit 10 can provide a turn-on voltage for the first transistor M1 and the second transistor M2, so as to enable both the first transistor M1 and the second transistor M2 to be in a turn-on state. In this way, the power supply device V2 can charge the energy storage device V1 through the charging circuit.

In response to detecting the disconnection of the charging signal, the controller controls the first switch K1 to be closed, and controls the second switch K2 to be opened, so that the predetermined voltage terminal Vg1 is connected to the control electrode of the first transistor M1. Since the voltage difference between the voltage of the predetermined voltage terminal Vg1 and the maximum voltage of the energy storage device V1 when the energy storage device V1 is fully charged is smaller than the predetermined threshold, the voltage difference between the gate and the source of the first transistor M1 is small, which can avoid the phenomenon of electromigration between the gate and source of the first transistor M1. The control circuit 10 controls the second transistor M2 to be turned off, and the voltage difference between the gate and the source of the second transistor M2 is also very small, which can prevent the phenomenon of electromigration between the gate and the source of the second transistor M2.

In the above-mentioned charging circuit, the charging circuit further includes the switching circuit connected to the controller of the apparatus to be charged. In response to detecting the charging signal, the controller controls the switching circuit to be turned on so as to electrically connect the control circuit with the control electrode of the first transistor; in response to detecting the disconnection of the charging signal, the controller controls the switch circuit to be turned on so as to electrically connect the predetermined voltage terminal with the control electrode of the first transistor. Through the embodiment of the present disclosure, the power supply device can charge the energy storage device when the first transistor and the second transistor are both in the turn-on state, and when at least one of the first transistor and the second transistor is in the turn-off state, the occurrence of electromigration in the first transistor and the second transistor can be avoided. Since the occurrence of electromigration in the two transistors is avoided when charging is not performed, the on-resistance of the two transistors will not be increased, the charging power will be increased, and the problem of serious heat generation of the charging circuit during charging is finally avoided. Furthermore, the switch circuit is flexibly controlled, can be applied to a variety of scenarios, and can also reduce the cost of the charging circuit.

In another embodiment, an optional structure of the control circuit is provided. Based on the embodiment illustrated in FIG. 1, as illustrated in FIG. 4, the control circuit 10 includes a turn-on control unit 101 and a switch control unit 102. The turn-on control unit 101 has an input terminal connected to the power supply device V2 and a clock signal terminal CLK, and has an output terminal connected to the control electrode of the second transistor M2. The switch control unit 102 has an input terminal connected to a switch signal terminal SW, and an output terminal connected to the control electrode of the second transistor M2. The turn-on control unit 101 is configured to provide a turn-on voltage for the second transistor M2 when the switch control unit 102 is turned off.

In this embodiment, the control circuit 10 includes the turn-on control unit 101 and the switch control unit 102. The input terminal of the turn-on control unit 101 is connected to the power supply device V2 and the clock signal terminal CLK, and the output terminal of the turn-on control unit 101 is connected to the control electrode of the second transistor M2. The input terminal of the switch control unit 102 is connected to the switch signal terminal SW, and the output terminal of the switch control unit 102 is connected to the control electrode of the second transistor M2. Both the clock signal terminal CLK and the switch signal terminal SW can be provided on the controller of the apparatus to be charged. When the controller detects that the power supply device V2 is charging the energy storage device V1, that is, when the controller detects the charging signal, the controller will output a clock signal from the clock signal terminal CLK, and output a switch signal from the switch signal terminal SW. The clock signal terminal CLK and the switch signal terminal SW can also be provided at other positions, which are not limited in detail in the embodiment of the present disclosure, and can be provided according to actual conditions.

When the controller detects the charging signal, the switch control unit 102 receives the switch signal and is turned off, and then the turn-on control unit 101 provides a turn-on voltage for the second transistor M2 when the switch control unit 102 is turned off. At this time, the control circuit 10 can also provide a turn-on voltage for the first transistor M1. When both the first transistor M1 and the second transistor M2 are turned on, the power supply device V2 can charge the energy storage device V1 through the charging circuit.

When the controller detects the disconnection of the charging signal, the switch control unit 102 receives the switch signal and is turned on, so that the control electrode of the second transistor M2 is grounded. At this time, a gate voltage of the second transistor M2 is 0V, a source voltage of the second transistor M2 is also 0V, and a voltage difference between the gate and the source of the second transistor M2 is 0V, which can avoid the occurrence of electromigration between the gate and the source of the second transistor M2. In addition, when the controller detects the disconnection of the charging signal, the control electrode of the first transistor M1 is connected to the predetermined voltage terminal Vg1, which can also prevent the occurrence of electromigration between the gate and source of the first transistor M1.

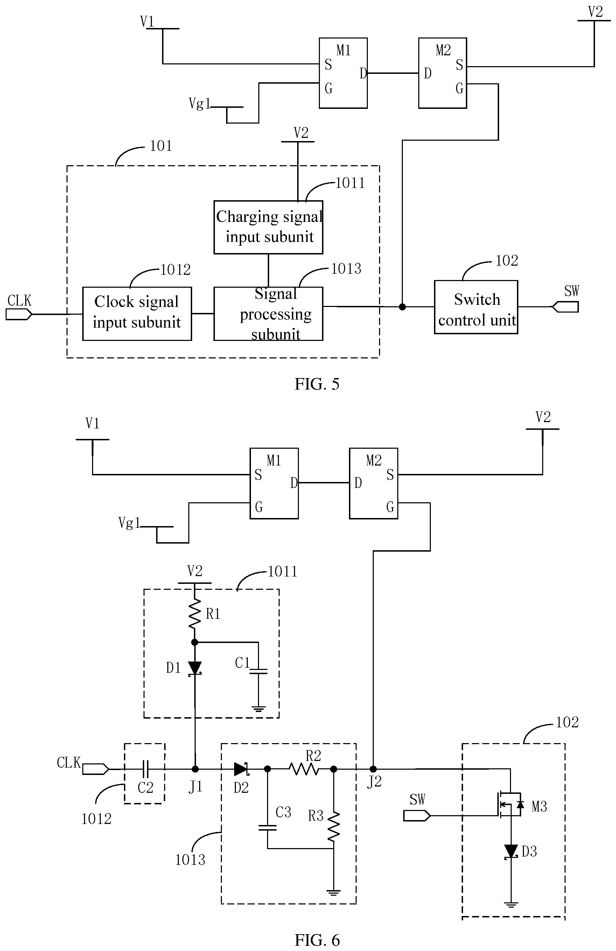

In one embodiment, as illustrated in FIG. 5, the turn-on control unit 101 includes a charging signal input subunit 1011, a clock signal input subunit 1012, and a signal processing subunit 1013. The charging signal input subunit 1011 has an input terminal connected to the power supply device V2, and an output terminal connected to an input terminal of the signal processing subunit 1013. The clock signal input subunit 1012 has an input terminal connected to the clock signal terminal CLK, and an output terminal connected to the input terminal of the signal processing subunit 1013. An output terminal of the signal processing subunit 1013 is connected to the control electrode of the second transistor M2. The charging signal input subunit 1011 is configured to input a charging signal of the power supply device V2 to the signal processing subunit 1013. The clock signal input subunit 1012 is configured to input a clock signal to the signal processing subunit 1013. The signal processing subunit 1013 is configured to provide a turn-on voltage for the second transistor M2 based on the charging signal and the clock signal.

Specifically, the turn-on control unit 101 includes the charging signal input subunit 1011, the clock signal input subunit 1012, and the signal processing subunit 1013. The input terminal of the charging signal input subunit 1011 is connected to the power supply device V2, and the output terminal of the charging signal input subunit 1011 is connected to the input terminal of the signal processing subunit 1013. When the controller detects that the power supply device V2 is charging the energy storage device, that is, when the controller detects the charging signal, the charging signal input subunit 1011 receives the charging signal of the power supply device V2, and then transmits the charging signal to the signal processing subunit 1013. When the power supply device V2 is not charging the energy storage device, that is, when the disconnection of the charging signal is detected, the power supply device V2 does not input the charging signal, and the charging signal input subunit 1011 does not work.

The input terminal of the clock signal input subunit 1012 is connected to the clock signal terminal CLK, and the output terminal of the clock signal input subunit 1012 is connected to the input terminal of the signal processing subunit 1013. When the controller detects the charging signal, the clock signal input subunit 1012 receives the clock signal and inputs the clock signal to the signal processing subunit 1013. When the controller detects a disconnection of the charging signal, the clock signal input subunit 1012 does not work.

The input terminal of the signal processing subunit 1013 is connected to the output terminal of the charging signal input subunit 1011 and the output terminal of the clock signal input subunit 1012, and the output terminal of the signal processing subunit 1013 is connected to the control electrode of the second transistor M2. When the controller detects the charging signal, the signal processing subunit 1013 receives the charging signal and the clock signal, processes the charging signal and the clock signal, and inputs the processed signal to the control electrode of the second transistor M2 so as to provide the turn-on voltage for the second transistor M2. When the controller detects the disconnection of the charging signal, the signal processing subunit 1013 has not received the charging signal and the clock signal, and the signal processing subunit 1013 does not work.

Optionally, as illustrated in FIG. 6, the charging signal input subunit 1011 includes a first resistor R1, a first diode D1, and a first capacitor C1. The first resistor R1 has one terminal connected to the power supply device V2, and another terminal connected to an anode of the first diode D1 and one terminal of the first capacitor C1; a cathode of the first diode D1 is connected to the input terminal of the signal processing subunit 1013; and another terminal of the first capacitor C1 is grounded.

Specifically, when the controller detects the charging signal, the charging voltage of the power supply device V2 is input from one terminal of the first resistor R1, and is applied to a node J1 through the first diode D1, that is, the charging signal is input to the signal processing subunit 1013. Where the first diode D1 is used to prevent backflow, and the first resistor R1 and the first capacitor C1 form a filter circuit which can filter out noise signals input along with the charging voltage.

Optionally, as illustrated in FIG. 6, the clock signal input subunit 1012 includes a second capacitor C2. One terminal of the second capacitor C2 receives the clock signal, and another terminal of the second capacitor C2 is connected to the input terminal of the signal processing subunit 1013.

Specifically, when the controller detects the charging signal, the clock signal is input from one terminal of the second capacitor C2, and is applied to the node J1 through the other terminal of the second capacitor C2, that is, the clock signal is input to the signal processing subunit 1013. Where the second capacitor C2 plays a role of energy storage and filtering.

Optionally, as illustrated in FIG. 6, the signal processing subunit 1013 includes a second diode D2, a second resistor R2, a third capacitor C3, and a third resistor R3. An anode of the second diode D2 is connected to the output terminal of the charging signal input subunit 1011 and the output terminal of the clock signal input subunit 1012, and a cathode of the second diode D2 is connected to one terminal of the second resistor R2 and one terminal of the third capacitor C3; Another terminal of the second resistor R2 is connected to the control electrode of the second transistor M2; another terminal of the third capacitor C3 is grounded; and one terminal of the third resistor R3 is connected to the control electrode of the second transistor M2, and another terminal of the third resistor R3 is grounded.

Specifically, the anode of the second diode D2 is connected to the node J1, and the cathode of the second diode D2 is connected to one terminal of the second resistor R2 and one terminal of the second capacitor C2. When the controller detects the charging signal, the charging signal and the clock signal on the node J1 are input from the anode of the second diode D2 and superimposed to obtain the processed signal. Then, the processed signal is applied to a node J2 through the second resistor R2, so as to provide a turn-on voltage for the second transistor M2 and turn on the second transistor M2.

In one embodiment, as illustrated in FIG. 6, the switch control unit 102 includes a third transistor M3 and a third diode D3. The third transistor M3 has a control electrode connected to the switch signal terminal SW, a source connected to a anode of the third diode D3, and a drain connected to the control electrode of the second transistor M2. A cathode of the third diode D3 is grounded.

In this embodiment, the switch control unit 102 includes the third transistor M3 and the third diode D3. The control electrode of the third transistor M3 is connected to the switch signal terminal SW. When the controller detects the charging signal, the switch signal output by the switch signal terminal SW turns off the third transistor M3, and the turn-on control unit 101 provides a turn-on voltage for the second transistor M2. At the same time, when the control electrode of the first transistor M1 is connected to the control circuit 10, the turn-on control unit 101 also provides a turn-on voltage for the first transistor M1. After both the first transistor M1 and the second transistor M2 are turned on, the power supply device V2 charges the energy storage device V1.

When the controller detects the disconnection of the charging signal, the switch signal output from the switch signal terminal SW turns on the third transistor M3. Since the source of the third transistor M3 is grounded through the third diode D3, and the drain of the third transistor M3 is connected to the control electrode of the second transistor M2, then, when the third transistor M3 is turned on, the drain voltage of the third transistor M3 is 0V. Therefore, the voltage of the control electrode of the second transistor M2 is 0V, and the second transistor M2 is turned off. Since the power supply device V2 is not charging the energy storage device V1, the source voltage of the second transistor M2 is 0V, and the voltage difference between the gate and the source of the second transistor M2 is 0V, avoiding the occurrence of electromigration between the gate and the source of the second transistor M2. At the same time, when the controller detects the disconnection of the charging signal, the control electrode of the first transistor M1 is connected to the predetermined voltage terminal Vg1, and the voltage difference between the gate and the source of the first transistor M1 is also small, which can avoid the occurrence of electromigration between the gate and the source of the first transistor M1.

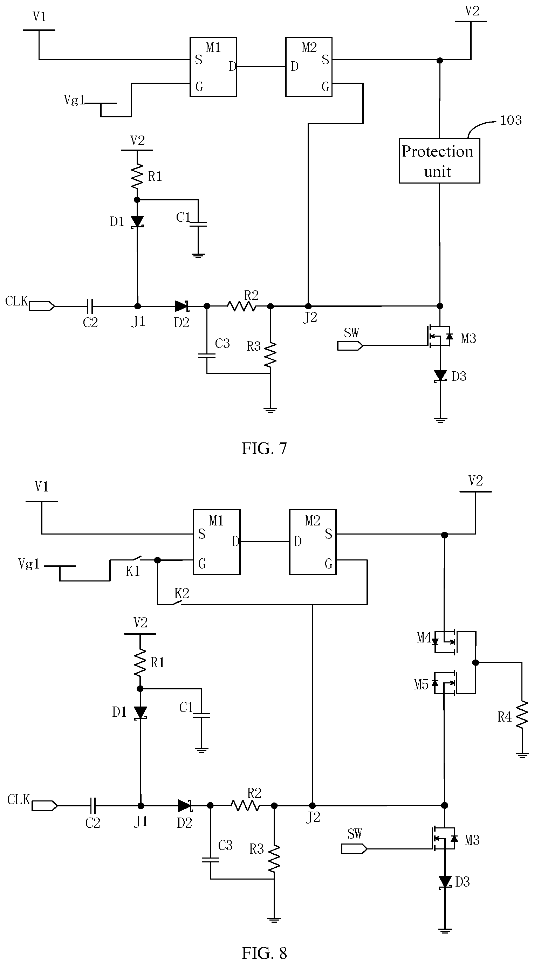

In one embodiment, as illustrated in FIG. 7, the control circuit further includes a protection unit 103. The protection unit 103 has an input terminal connected to the power supply device V2, and an output terminal connected to the control electrode of the second transistor M2. The protection unit 103 is configured to protect the second transistor M2 when the power supply device V2 inputs a negative voltage.

In this embodiment, the control circuit further includes the protection unit 103. When the power supply device V2 inputs a negative voltage, the protection unit 103 can prevent the negative voltage from being input to the second transistor M2 to cause damage to the second transistor M2.

Optionally, as illustrated in FIG. 8, the protection unit 103 includes a fourth transistor M4, a fifth transistor M5, and a fourth resistor R4. The fourth transistor M4 has a control electrode connected to a control electrode of the fifth transistor M5 and one terminal of the fourth resistor R4, a source connected to the power supply device V2, and a drain connected to a drain of the fifth transistor M5; a source of the fifth transistor M5 is connected to the control electrode of the second transistor M2; and another terminal of the fourth resistor R4 is grounded.

Specifically, when the power supply device V2 inputs a negative voltage, the fourth transistor M4 and the fifth transistor M5 are turned on to prevent the negative voltage from being input to the control electrode of the second transistor M2.

The control circuit in the above charging circuit includes the turn-on control unit and the switch control unit. When the controller detects the charging signal, the turn-on control unit provides a turn-on voltage for the second transistor based on the charging signal and the clock signal of the power supply device. When both the first transistor and the second transistor are turned on, the power supply device can charge the energy storage device. When the controller detects the disconnection of the charging signal, the switch control unit controls the second transistor to be turned off, so as to avoid the occurrence of electromigration in the second transistor, thereby avoiding the problem of serious heat generation in the charging circuit during charging. Further, the protection unit can protect the second transistor when the power supply device inputs a negative voltage, thereby protecting the entire charging circuit.

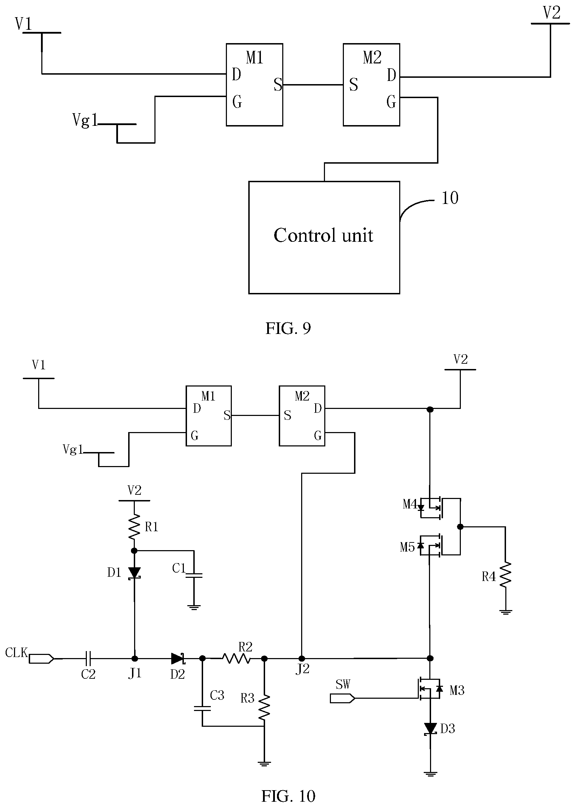

In another embodiment, an optional structure of the charging circuit is provided. On the basis of the embodiment illustrated in FIG. 1, as illustrated in FIG. 9, the first electrode of the first transistor M1 has a drain, and the second electrode of the first transistor M1 is a source. The first electrode of the second transistor M2 is a drain, and the second electrode of the second transistor M2 is a source.

In this embodiment, the drain of the first transistor M1 can be connected to the energy storage device V1, the source of the first transistor M1 can be connected to the source of the second transistor M2, and the drain of the second transistor M2 can be connected to the power supply device V2. When the controller detects the disconnection of the charging signal, the control circuit 10 controls the second transistor M2 to be turned off, and both the gate and the source of the second transistor M2 are 0V. The voltage difference between the gate and the source of the second transistor M2 is 0V, which can avoid the occurrence of electromigration between the gate and the source of the second transistor M2. At the same time, since the control electrode of the first transistor M1 is connected to the predetermined voltage terminal Vg1, and the source of the first transistor M1 is connected to the source of the second transistor M2, then the predetermined threshold can be set to a negative value. For example, the predetermined threshold is set to -4, and if the maximum voltage of the energy storage device V1 is 5V, the voltage of the predetermined voltage terminal Vg1 is 0V, and the difference between the voltage of the predetermined voltage terminal Vg1 and the maximum voltage of the energy storage device V1 is -5V, which is smaller than the predetermined threshold. Since the voltage of the predetermined voltage terminal Vg1 is 0V, the first transistor M1 is turned off, and both the gate and the source of the first transistor M1 are 0V. Therefore, the voltage difference between the gate and the source of the first transistor M1 is small, which can avoid the occurrence of electromigration between the gate and the source of the first transistor M1. Moreover, even if the drain of the first transistor M1 is connected to the energy storage device, since the drain of the first transistor M1 does not contain silver ions, the first transistor M1 will not exhibit the phenomenon of electromigration. Further, the second transistor M2 is turned off, and the voltage between the gate and the drain of the second transistor is 0V, so the second transistor M2 will not exhibit the phenomenon of electromigration, either.

When the controller detects the charging signal, the predetermined voltage terminal Vg1 provides a turn-on voltage for the first transistor M1, the control circuit 10 provides a turn-on voltage for the second transistor M2, and both the first transistor M1 and the second transistor M2 are turned on. The power supply device V2 charges the energy storage device V1 through the first transistor M1 and the second transistor M2. Optionally, as illustrated in FIG. 10, both the first transistor M1 and the second transistor M2 are NMOS transistors.

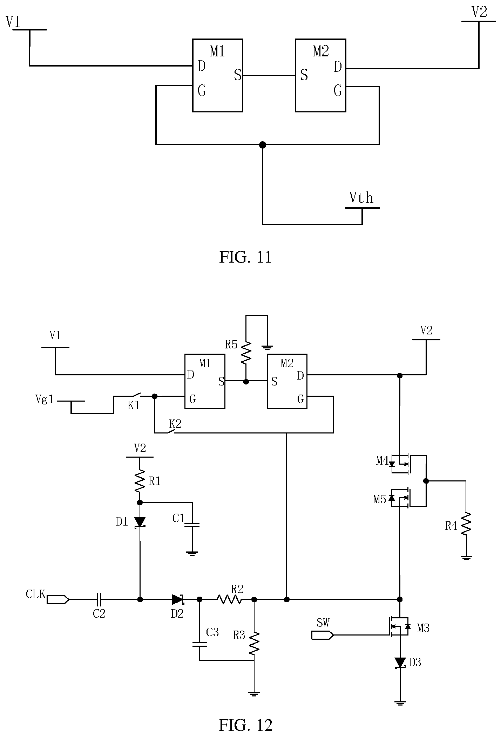

Optionally, on the basis of the embodiment in FIG. 9, the gate voltage Vg1 of the first transistor M1 is equal to the gate voltage provided by the control circuit to the second transistor M2, and this circuit can be equivalent to the circuit described in FIG. 11. The gate of the first transistor M1 and the gate of the second transistor M2 are both connected to the voltage Vth, and the voltage Vth is greater than or equal to the turn-on voltage of the first transistor M1 and the turn-on voltage of the second transistor M2. In addition, the voltage Vth may be a voltage provided by an external voltage port, or may be provided by the control circuit in FIG. 9, which is not limited in the present disclosure. When the controller detects the charging signal, the voltage Vth provides the turn-on voltage for the first transistor M1 and the second transistor M1, so that the first transistor M1 and the second transistor M1 are turned on to charge the apparatus to be charged. When the controller detects the disconnection of the charging signal, since the drain (D electrode ) of the MOS transistor does not contain silver, electromigration will not occur.

In one embodiment, as illustrated in FIG. 12, the charging circuit further includes a fifth resistor R5. One terminal of the fifth resistor R5 is connected to the second electrode of the first transistor M1, and another terminal of the fifth resistor R5 is grounded. Specifically, one terminal of the fifth resistor R5 is connected to the source of the first transistor M1 and the source of the second transistor M2. When the controller detects the disconnection of the charging signal, electrostatic charges on the first transistor M1 and the second transistor M2 can be released through the fifth resistor R5, avoiding the problem of static electricity loss.

In the above charging circuit, the first electrode of the first transistor is a drain, and the second electrode of the first transistor is a source; and the first electrode of the second transistor is a drain, and the second electrode of the second transistor is a source. When the controller detects the charging signal, both the first transistor and the second transistor are in a turn-on state, and the power supply device charges the energy storage device through the charging circuit. When the controller detects the disconnection of the charging signal, both a gate-source voltage difference of the first transistor and a gate-source voltage difference of the second transistor are small, the occurrence of electromigration in the transistors can be avoided, and thereby the problem of serious heat generation in the charging circuit during charging can be avoided.

In another embodiment, a charging chip is provided, and the charging chip includes the charging circuit as described in the foregoing embodiment.

In this embodiment, the charging circuit includes the first transistor M1, the second transistor M2, and the control circuit 10. The control electrode of the first transistor M1 is connected to the predetermined voltage terminal Vg1, the first electrode of the first transistor M1 is connected to the energy storage device V1 of the apparatus to be charged, the second electrode of the first transistor M1 is connected to the second electrode of the second transistor M2, the control electrode of the second transistor M2 is connected to the control circuit 10, and the first electrode of the second transistor M2 is connected to the power supply device V2. The control circuit 10 is configured to control a working state of the second transistor M2. When at least one of the first transistor M1 and the second transistor M2 is in a turn-off state, a difference between the voltage of the predetermined voltage terminal Vg1 and the maximum voltage of the energy storage device V1 when the energy storage device V1 is fully charged is smaller than the predetermined threshold.

The charging chip includes the charging circuit, and the charging circuit includes the first transistor and the second transistor. When both the first transistor and the second transistor are in a turn-on state, the power supply device can charge the energy storage device through the charging chip. When at least one of the first transistor and the second transistor is in the turn-off state, each of the gate-source voltage difference of the first transistor and the gate-source voltage difference of the second transistor in the charging circuit is relatively small, which can avoid the occurrence of electromigration in the transistors and thus avoids the problem of serious heat generation of the charging chip during charging.

In another embodiment, a mobile terminal is provided, and the mobile terminal includes the charging circuit as in the above-mentioned embodiment.

In this embodiment, the charging circuit includes the first transistor M1, the second transistor M2, and the control circuit 10. The control electrode of the first transistor M1 is connected to the predetermined voltage terminal Vg1, the first electrode of the first transistor M1 is connected to the energy storage device V1 of the apparatus to be charged, the second electrode of the first transistor M1 is connected to the second electrode of the second transistor M2, the control electrode of the second transistor M2 is connected to the control circuit 10, and the first electrode of the second transistor M2 is connected to the power supply device V2. The control circuit 10 is configured to control a working state of the second transistor M2. When at least one of the first transistor M1 and the second transistor M2 is in the turn-off state, a difference between the voltage of the predetermined voltage terminal Vg1 and the maximum voltage of the energy storage device V1 when the energy storage device V1 is fully charged is smaller than the predetermined threshold.

The mobile terminal is provided with a controller, and the controller is provided with a clock signal terminal CLK and a switch signal terminal SW. When the controller detects that the power supply device V2 is charging the energy storage device V1, that is, when the controller detects a charging signal, the controller outputs a clock signal from the clock signal terminal CLK to the charging circuit, and outputs a switch signal from the switch signal terminal SW to the charging circuit.

The controller can also be connected to the switch circuit 20 of the charging circuit, so as to control the closing and opening of the switches in the switch circuit 20. When the controller detects the disconnection of the charging signal, the control circuit 10 enables the electrical connection between the control electrode of the first transistor M1 and the predetermined voltage terminal Vgl; and when the controller detects the charging signal, the control circuit 10 enables the electrical connection between the control electrode of the first transistor M1 and the control circuit 10.

The mobile terminal is further provided with a charging interface and a battery, and the first electrode of the second transistor M2 can be connected to the power supply device V2 through the charging interface, so that the power supply device V2 can charge the battery of the mobile terminal.

The above-mentioned mobile terminal includes the charging circuit, and when both the first transistor and the second transistor are in a turn-on state, the power supply device can charge the energy storage device of the mobile terminal. When at least one of the first transistor and the second transistor is in the turn-off state, each of the gate-source voltage difference of the first transistor and the gate-source voltage difference of the second transistor in the charging circuit is small, the occurrence of electromigration in the transistors can be avoided and thereby the problem of serious heat generation of the mobile terminal during charging can be avoided.

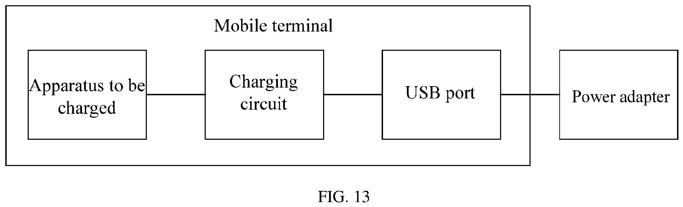

In another embodiment, as illustrated in FIG. 13, a charging system is provided. The charging system includes a power adapter and the mobile terminal of the above embodiment. The power adapter is configured to charge the mobile terminal through a USB port of the mobile terminal.

In this embodiment, the mobile terminal includes the charging circuit, the charging circuit includes the first transistor M1, the second transistor M2, and the control circuit 10. The control electrode of the first transistor M1 is connected to the predetermined voltage terminal Vg1, the first electrode of the first transistor M1 is connected to the energy storage device V1 of the apparatus to be charged, the second electrode of the first transistor M1 is connected to the second electrode of the second transistor M2, the control electrode of the second transistor M2 is connected to the control circuit 10, and the first electrode of the second transistor M2 is connected to the power supply device V2. The control circuit 10 is configured to control the working state of the second transistor M2. When at least one of the first transistor M1 and the second transistor M2 is in the turn-off state, the difference between the voltage of the predetermined voltage terminal Vg1 and the maximum voltage of the energy storage device V1 is smaller than the predetermined threshold.

The charging interface of the mobile terminal is a USB port, and the first electrode of the second transistor M2 of the charging circuit can be connected to the power adapter through the USB port, so that the power adapter can charge the mobile terminal.

The above charging system includes the mobile terminal and the power adapter, and the power adapter is configured to charge the mobile terminal through the USB port of the mobile terminal. The mobile terminal includes the charging circuit, and the charging circuit includes the first transistor and the second transistor. When both the first transistor and the second transistor are in a turn-on state, the power adapter can charge the battery of the mobile terminal through the charging circuit. When at least one of the first transistor and the second transistor is in the turn-off state, the gate-source voltage difference of each of the first transistor and the second transistor in the charging circuit is small, thus avoiding the occurrence of electromigration in the transistors, and avoiding the problem of serious heat generation of the mobile terminal when the power adapter charges the mobile terminal.

The technical features of the above embodiments can be combined arbitrarily. To make the description concise, the description is not made with respect to all possible combinations of the technical features in the above embodiments. However, all possible combinations of these technical features shall fall into the scope described in this specification, unless contradicted to each other.

The above embodiments only present several implementation manners of the present disclosure, and their descriptions are specific and detailed, but they should not be understood as a limitation on the patent scope of the present disclosure. It should be pointed out that those skilled in the art can make several modifications and improvements without departing from the concept of the present disclosure, and these all fall within the protection scope of the present disclosure. Therefore, the protection scope of the present disclosure should be subject to the appended claims.

## Claims

1. A charging circuit, comprising:
a first transistor;
a second transistor; and
a control circuit;
wherein the first transistor has a first electrode connected to an energy storage device of an apparatus to be charged, and a second electrode connected to a second electrode of the second transistor,
the second transistor has a control electrode connected to the control circuit, and a first electrode connected to a power supply device,
the control circuit is configured to control a working state of the second transistor, and
when at least one of the first transistor and the second transistor is in a turn-off state, a control electrode of the first transistor is connected to a predetermined voltage terminal, and a difference between a voltage of the predetermined voltage terminal and a maximum voltage of the energy storage device when the energy storage device is fully charged is smaller than a predetermined threshold.

2. The charging circuit according to claim 1, wherein the predetermined voltage terminal provides a turn-on voltage for the first transistor, and the control circuit provides a turn-on voltage for the second transistor; and
the power supply device transmits a current to the energy storage device through the first transistor and the second transistor when both the first transistor and the second transistor are in a turn-on state.

3. The charging circuit according to claim 1, further comprising a switch circuit connected to a controller of the apparatus to be charged,
wherein the switch circuit is respectively connected to the predetermined voltage terminal, the control circuit, a control electrode of the first transistor, and the control electrode of the second transistor;
the controller is configured to, in response to detecting a charging signal, control the switch circuit to be turned on to electrically connect the control circuit with the control electrode of the first transistor; or, in response to detecting a disconnection of the charging signal, control the switch circuit to be turned on to electrically connect the predetermined voltage terminal with the control electrode of the first transistor; and
the control circuit is configured to, in response to being electrically connected to the control electrode of the first transistor, provide a turn-on voltage for the first transistor and the second transistor to enable the power supply device to charge the energy storage device through the first transistor and the second transistor.

4. The charging circuit according to claim 3, wherein the switch circuit comprises a first switch and a second switch that are separately connected to the controller of the apparatus to be charged;
the first switch has one terminal connected to the control electrode of the first transistor, and another terminal connected to the predetermined voltage terminal;
the second switch has one terminal connected to the control electrode of the first transistor, and another terminal connected to the control circuit; and
the controller is configured to, in response to detecting the charging signal, control the first switch to be opened and the second switch to be closed to electrically connect the control circuit with the control electrode of the first transistor; or, in response to detecting a disconnection of the charging signal, control the first switch to be closed and the second switch to be opened to electrically connect the predetermined voltage terminal with the control electrode of the first transistor.

5. The charging circuit according to any one of claims 1 to 4, wherein the control circuit comprises a turn-on control unit and a switch control unit,
wherein the turn-on control unit has an input terminal connected to the power supply device and a clock signal terminal, and an output terminal connected to the control electrode of the second transistor;
the switch control unit has an input terminal connected to a switch signal terminal, and an output terminal connected to the control electrode of the second transistor; and
the turn-on control unit is configured to provide a turn-on voltage for the second transistor when the switch control unit is turned off.

6. The charging circuit according to claim 5, wherein the turn-on control unit comprises a charging signal input subunit, a clock signal input subunit, and a signal processing subunit,
wherein the charging signal input subunit has an input terminal connected to the power supply device, and an output terminal connected to an input terminal of the signal processing subunit; the clock signal input subunit has an input terminal connected to the clock signal terminal, and an output terminal connected to the input terminal of the signal processing subunit; and the signal processing subunit has an output terminal connected to the control electrode of the second transistor; and
the charging signal input subunit is configured to input a charging signal of the power supply device to the signal processing subunit; the clock signal input subunit is configured to input a clock signal to the signal processing subunit; and the signal processing subunit is configured to provide a turn-on voltage for the second transistor based on the charging signal and the clock signal.

7. The charging circuit according to claim 6, wherein the charging signal input subunit comprises a first resistor, a first diode, and a first capacitor,
wherein the first resistor has one terminal connected to the power supply device, and another terminal connected to an anode of the first diode and one terminal of the first capacitor;
a cathode of the first diode is connected to the input terminal of the signal processing subunit; and
the other terminal of the first capacitor is grounded.

8. The charging circuit according to claim 6, wherein the clock signal input subunit comprises a second capacitor,
wherein one terminal the second capacitor is configured to receive the clock signal, and the other terminal of the second capacitor is connected to the input terminal of the signal processing subunit.

9. The charging circuit according to claim 6, wherein the signal processing subunit comprises a second diode, a second resistor, a third capacitor, and a third resistor;
an anode of the second diode is connected to the output terminal of the charging signal input subunit and the output terminal of the clock signal input subunit, and a cathode of the second diode is connected to one terminal of the second resistor and one terminal of the third capacitor;
the other terminal of the second resistor is connected to the control electrode of the second transistor;
the other terminal of the third capacitor is grounded; and
one terminal of the third resistor is connected to the control electrode of the second transistor, and the other terminal of the third resistor is grounded.

10. The charging circuit according to claim 5, wherein the switch control unit comprises a third transistor and a third diode,
wherein the third transistor has a control electrode connected to the switch signal terminal, a source connected to an anode of the third diode, and a drain connected to the control electrode of the second transistor; and
a cathode of the third diode is grounded.

11. The charging circuit according to claim 5, wherein the control circuit further comprises a protection unit,
wherein the protection unit has an input terminal connected to the power supply device, and an output terminal connected to the control electrode of the second transistor; and the protection unit is configured to protect the second transistor when the power supply device inputs a negative voltage.

12. The charging circuit according to claim 11, wherein the protection unit comprises a fourth transistor, a fifth transistor and a fourth resistor,
wherein the fourth transistor has a control electrode connected to a control electrode of the fifth transistor and one terminal of the fourth resistor, a source connected to the power supply device, and a drain connected to a drain of the fifth transistor;
a source of the fifth transistor is connected to the control electrode of the second transistor; and
the other terminal of the fourth resistor is grounded.

13. The charging circuit according to any one of claims 1 to 4, wherein the first electrode of the first transistor is a source, and the second electrode of the first transistor is a drain; and
the first electrode of the second transistor is a source, and the second electrode of the second transistor is a drain.

14. The charging circuit according to any one of claims 1 to 4, wherein the first electrode of the first transistor is a drain, and the second electrode of the first transistor is a source; and
the first electrode of the second transistor is a drain, and the second electrode of the second transistor is a source.

15. The charging circuit according to claim 14, further comprising a fifth resistor,
wherein one terminal of the fifth resistor is connected to the second electrode of the first transistor, and the other terminal of the fifth resistor is grounded.

16. A charging chip, comprising the charging circuit according to any one of claims 1 to 15.

17. A mobile terminal, comprising the charging circuit according to any one of claims 1 to 15.

18. A charging system, comprising a power adapter and the mobile terminal according to claim 17, wherein the power adapter is configured to charge the mobile terminal through a USB port of the mobile terminal.
